# EUROPÄISCHE PATENTSCHRIFT

(11) **EP 0 923 465 B1**
(45) Veröffentlichungstag und Bekanntmachung des Hinweises auf die Patenterteilung: **09.05.2001**
(21) Anmeldenummer: 97942884.4
(22) Anmeldetag: 27.08.1997
(51) Int. Cl.: B60R 16/02

(54) **DATENBUS FÜR MEHRERE TEILNEHMER**
DATA BUS FOR SEVERAL APPARATUSES
BUS DE DONNEES POUR PLUSIEURS ABONNES

(30) Priorität: 07.09.1996 DE 19636441; 07.09.1996 DE 19636442; 15.05.1997 DE 19720401
(43) Veröffentlichungstag der Anmeldung: 23.06.1999
(73) Patentinhaber: Bayerische Motoren Werke Aktiengesellschaft, 80788 München (DE)
(72) Erfinder: GRIESSBACH, Robert, D-83629 Weyarn (DE)
(86) Internationale Anmeldenummer: EP9704672
(87) Internationale Veröffentlichungsnummer: WO9809845

(56) Entgegenhaltungen:
- WO-A-89/09146
- WO-A-91/06447
- GB-A- 2 290 682
- US-A- 5 309 436

## Beschreibung

Die Erfindung bezieht sich auf einen Datenbus mit mehreren Teilnehmern.

Derartige Datenbusse finden zunehmend Verbreitung. Sie dienen beispielsweise bei Gebäuden dazu, die verschiedenen elektrischen Schalter, Stromverbraucher und dergleichen eines Gebäudes schaltungstechnisch miteinander zu verbinden und Steuerbefehle der Teilnehmer untereinander zu vermitteln. Weitere Anwendungsfälle sind die Vernetzung von Maschinensteuerungen im industriellen Bereich, z.B. für eine Fertigungsstraße, Datenbusse in Flugzeugen für die verschiedenen Antriebs- und Steuerungskomponenten sowie Landfahrzeuge mit den entsprechenden Einrichtungen zum Schalten, Umformen und Verbrauchen elektrischer Energie.

Es existieren zwei verschiedene Ausführungsformen von Datenbussen. Bei der einen Ausführungsform handelt es sich um den synchronisierten Typ, bei dem von einem Busmaster aus ein Synchronisationspuls mit vorgegebener Taktfrequenz ausgegeben wird. Innerhalb der Zeitspanne zwischen zwei verschiedenen Taktimpulsen gehen die Teilnehmer des Datenbusses innerhalb eines definierten Zeitfenster auf den Datenbus. Der Zeitpunkt ihrer jeweiligen Sendeberechtigung ist i. d. R. durch ihre Sendepriorität bestimmt und jeder Teilnehmer innerhalb eines definierten Zeitfenster nach dem Aussenden des Synchronisationspulses sendet.

Ein derartiger Datenbus hat den Vorteil, ohne irgendwelche Kollisionen von Teilnehmern arbeiten zu können, da jeder Teilnehmer ein definiertes Zeitfenster für seine Sendung zur Verfügung hat. Andererseits ist ein derartiger Datenbus relativ langsam, da die Taktzeit durch die Zahl der Teilnehmer bestimmt ist und insbesondere bei einer Vielzahl von Teilnehmern sich damit eine geringe Taktfrequenz ergibt. Hinzu kommt die Schwierigkeit, mit ein und demselben Datenbuskonzept nicht nur eine definierte Anzahl von Teilnehmern, sondern auch eine demgegenüber abweichende Zahl von Teilnehmern versorgen zu können. Es werden somit Zeitfenster auch für nur im Maximalfall vorhanden Teilnehmer vorgehalten mit der Folge einer entsprechenden Verringerung der Taktfrequenz.

Das zweite Datenbuskonzept ist als asynchroner Datenbus bekannt. Dabei gehen die Teilnehmer entsprechend ihrer hierarchiebedingten Sendeberechtigung auf den Datenbus. Das hat zur Folge, daß der prioritätshöchste Teilnehmer jederzeit auf den Datenbus gehen kann, bringt jedoch den Nachteil mit sich, daß dieser Teilnehmer den Datenbus "verstopfen" kann, d. h. für prioritätsniedere Teilnehmer nicht mehr die Möglichkeit besteht, auf den Datenbus zu gehen. Zudem besteht das Problem der Kollision von Teilnehmern, da bedingt durch die Signallaufzeiten mehrere Teilnehmer gleichzeitig auf dem scheinbar freien Datenbus auf Sendung gehen können und sie erst während ihrer Sendung die Sendung eines anderen Teilnehmers erfahren. Dies macht aufwendige Kollisionsvermeidungsstrategien wie CSMA/CD erforderlich.

Ein Beispiel für einen synchronen Datenbus findet sich in der US 4,964,076, eines für einen asynchronen Datenbus in der US 5,333,301.

Der Erfindung liegt die Aufgabe zugrunde, einen Datenbus der eingangs genannten Art zu schaffen, der die Vorteile eines synchronen und eines asynchronen Datenbus vereinigt.

Die Erfindung löst diese Aufgabe durch die Merkmale des Patentanspruchs 1.

Der erfindungsgemäße Datenbus besitzt Merkmale sowohl des synchronen als auch des asynchronen Datenbusses. Der Synchronisationspuls ist ein eindeutiges Merkmal des synchronen Datenbusses. Die angegebene Taktzeit ist weder bei einem asynchronen noch bei einem synchronen Datenbus zu finden. Die Zeitspanne liegt zwischen der Sendedauer des prioritätshöchsten und der kumulierten Sendezeit aller Teilnehmer. Bei einem Datenbus mit 100 Teilnehmern ist diese Zeitspanne z.B. so gewählt, daß die 50 prioritätshöchsten Teilnehmer alle innerhalb einer Zykluszeit auf den Datenbus gehen können, während in diesem Fall die rangniedrigeren Teilnehmer nicht mehr auf den Datenbus kommen.

Die Zahl 50, d.h. in etwa die Hälfte der maximal vorhandenen Teilnehmer ist nur als Anhaltspunkt zu verstehen. Sie kann im jeweiligen Anwendungsfall auch zwischen 2 und beispielsweise 95 Teilnehmern liegen. Wesentlich ist lediglich, daß die Taktzeit tatsächlich wesentlich kleiner als die kumulierte Sendezeit aller Teilnehmer ist. es somit nie möglich ist, sämtliche Teilnehmer innerhalb eines Zyklus auf dem Datenbus senden zu lassen. Andererseits wird dadurch das angesprochene Problem des Vorhalts von Zeitfenstern für möglicherweise nicht vorhandene Busteilnehmer beseitigt und eine Taktzeit erreicht, die den jeweiligen Anforderungen entspricht.

Durch die Vergabe einer hierarchischen Sendeberechtigung werden die bei einem asynchronen Datenbus typischen Kollisionsverhinderungsalgorithmen überflüssig. Gleichzeitig wird durch die Wahl der Sendezeit für den in der Hierarchie jeweils nachfolgenden Teilnehmer bei Nichtsenden des vorangehenden Teilnehmers in der angegebenen Weise sichergestellt, daß nur die tatsächlich sendenden Teilnehmer auf den Datenbus gehen und die Teilnehmer, die nicht innerhalb des Zyklus den Datenbus für ihre Sendung benutzen, nur insoweit berücksichtigt werden, als sichergestellt wird, daß sie tatsächlich nicht senden. Dies wird unter Berücksichtigung der Signallaufzeiten innerhalb des Datenbusses erreicht.

### Das Grundprinzip der Erfindung läßt sich wie folgt beschreiben:

Jeder Teilnehmer erhält im Prinzip die Möglichkeit, mit seiner Sendung auf den Datenbus zu gehen. Allerdings ist er der Hierarchie unterworfen. Sein Sendezeitpunkt liegt innerhalb eines Zyklus umso später, je niedriger seine hierarchische Stufe ist. Liegt sein Sendezeitpunkt nach dem Ablauf des Zyklus, kann er frühestens im nächsten Zyklus auf Sendung gehen. Senden auch dann wieder entsprechend viele ranghöhere Teilnehmer, kann er auch dann noch nicht senden, usw. Seine Sendemöglichkeit hängt also in jedem Sendezyklus davon ab, wieviele ranghöhere Teilnehmer senden.

Die Zykluszeit wird danach bemessen, wievielen Teilnehmern in jedem Zyklus immer die Möglichkeit zu senden gegeben werden muß. Die Zykluszeit ist für die Zahl dieser bevorzugten Teilnehmer bemessen. Ob nun die anderen Teilnehmer tatsächlich während eines Zyklus senden können, hängt davon ab, wieviele der bevorzugten Teilnehmer tatsächlich (nicht) auf Sendung gehen und wieviele der prioritätshöheren anderen Teilnehmer senden.

Bei der Sendung eines Teilnehmers kann es vorkommen, daß das Sendeende mit dem Sendezeitpunkt des Synchronpulses, d.h. mit dem Zyklusende zusammenfällt oder sogar danach liegt. Hierfür bieten sich im Rahmen der Erfindung unterschiedliche Lösungen. Eine Lösung besteht darin, die Ausgabe des Synchronisationspulses so lange zu verzögern, bis der Teilnehmer seine Sendung beendet hat.

Um trotzdem die Taktfrequenz beibehalten zu können, ist der nachfolgende Synchronisationspuls in seiner Ausgabezeit so bemessen, daß er mit dem vorausgehenden vorletzten Synchronisationspuls synchronisiert ist. Bezeichnet man den vorausgehenden vorletzten Synchronisationspuls als ersten Puls und die nachfolgenden als zweiten, dritten usw. Puls, so ist der zeitliche Abstand zwischen dem ersten und dem zweiten Puls größer als die Taktzeit, während der zeitliche Abstand zwischen dem zweiten und dem dritten Puls kleiner als die Taktzeit ist. Sollte bei Ausgabe des dritten Synchronisationspulses wiederum ein Teilnehmer auf dem Datenbus senden, so wird auch der dritte Synchronisationspuls verzögert ausgegeben. Der darauffolgende Synchronisationspuls, d. h. hier der vierte, kompensiert dann die Zeitüberschreitung usw.

Eine altemative Lösung sieht vor, daß der Teilnehmer nicht sendet, wenn das Ende seiner Sendung mit dem Ende des Zyklus zusammenfällt oder sogar danach liegt. Damit ergibt sich der Vorteil einer stets konstanten Zykluszeit. Korrekturen wie bei der ersten Lösungsalternative können dann unterbleiben.

Weitere Ausgestaltungen der Erfindung ergeben sich aus den weiteren Patentansprüchen und sind anhand der Zeichnung weiter erläutert. Es zeigt
Fig. 1 schematisch einen Datenbus für mehrere Einrichtungen eines Fahrzeugs, die der Insassen-Sicherheit dienen,
Fig. 2 ein Diagramm zur Erläuterung des Telegrammverkehrs auf dem Datenbus von Fig. 1. und
Fig. 3 den Telegrammverkehr für eine Alternative zum Datenbus von Fig. 1 und 2.

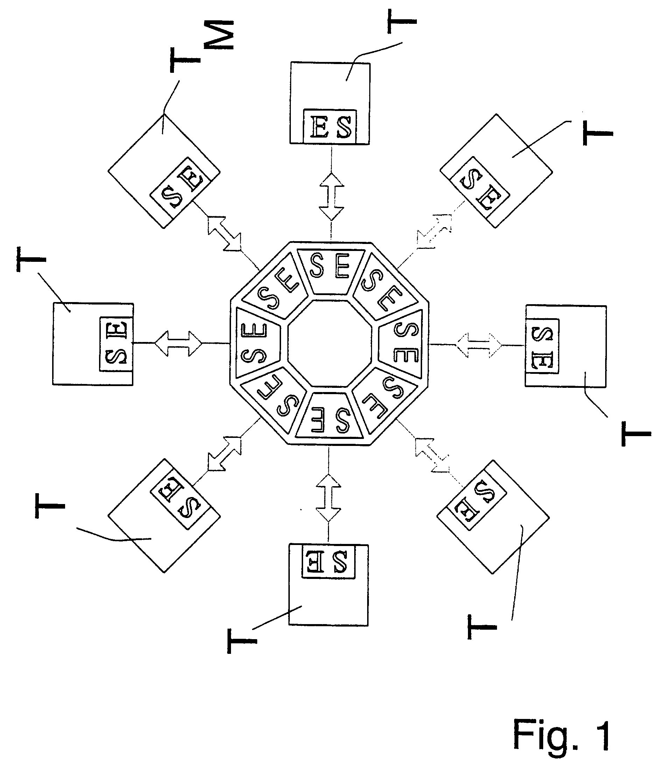

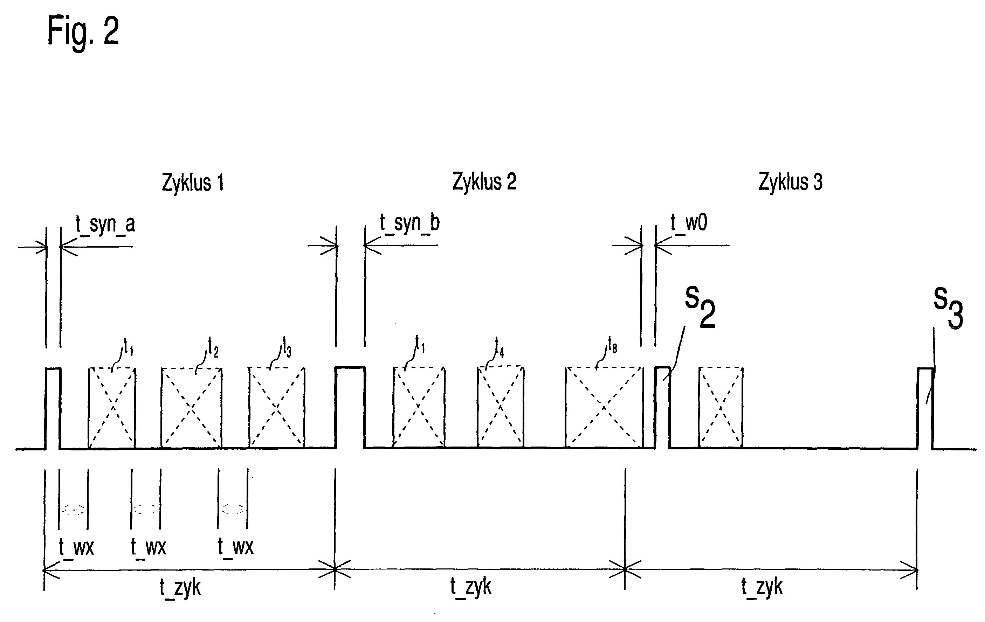

Der Datenbus von Fig. 1 und 2 besteht im wesentlichen aus einem einzigen Lichtwellenleiter (i. f. LWL-Faser). Die einzelnen Teilnehmer T sind über die Faser sowie über einen aktiven Sternkoppler miteinander verbunden.

In jedem Teilnehmer ist zur Anschaltung an den LWL-Bus ein Sende/Empfangsbaustein S/E vorhanden, in den eine Sende- und Empfangsdiode sowie eine Strahlteileroptik integriert ist (nicht dargestellt). Die durch die LWL-Faser gebildete LWL-Strecke wird bidirektional betrieben. Der aktive Sternkoppler besteht im wesentlichen aus den S/E-Bausteinen. Für jeden Teilnehmer ist ein S/E-Baustein vorhanden. Die Bausteine sind im Sternkoppler so verschaltet, daß die von einem Teilnehmer gesendete Botschaft auf alle anderen Stränge des Bussystems verteilt wird. Diese Stränge sind im wesentlichen gebildet durch die S/E-Bausteine sowohl des Sternkopplers als auch damit korrespondierend die S/E-Bausteine der jeweiligen Teilnehmer.

Die auf dem Bus vom jeweils sendenden Teilnehmer ausgehenden und an die anderen Teilnehmer übertragenen Telegramme charakterisieren Zustände bzw. Meßwerte von Sensoren als einem Teil der Teilnehmer. Ferner befinden sich als weitere Teilnehmer Aktuatoren wie Airbags und Gurtstraffer am Bussystem angeschlossen. Die Aktuatoren erfassen die von den Sensoren gelieferten Telegramme und berechnen, jeder für sich, die notwendigen Aktionen. Gleichzeitig wird durch den Busmaster ein gegebenenfalls kritischer Zustand in einem Teilnehmer erkannt und durch Ausgabe eines Initialisierungsimpulses auf den Bus beantwortet, der sich in seiner Länge von dem ansonsten vom Busmaster ausgegebenen Initialisierungsimpuls unterscheidet.

Einer der Teilnehmer dient als Busmaster. Hierfür sei der mit T_{M} bezeichnete Teilnehmer vorgesehen. Dieser Teilnehmer sendet in zeitlich regelmäßigen Abständen einen Synchronisationspuls aus, wie im Diagramm von Fig. 2 dargestellt. Mit vorgegebender Sendepriorität erhalten die Teilnehmer die Sendeberechtigung. Befindet sich der jeweilige Teilnehmer in einem sicherheitsunkritischen Zustand, so sendet er in der Regel nicht. In der Regel bedeutet dabei, daß es sich dabei nicht um den Initialisierungsvorgang handelt, bei dem die Teilnehmer nach Inbetriebnahme des Fahrzeugs sich durch Aussenden einer Kennung den anderen Teilnehmern und dem Busmaster zu erkennen geben. Die Teilnehmer melden sich allerdings zyklisch, in relativ langen Abständen von mehreren Zyklen immer wieder, sofern sie nicht ohnehin auf Sendung gehen und geben ein kurzzeitiges Präsenzsignal ab.

Handelt es sich um einen sicherheitsunkritischen Zustand, d. h. senden die Teilnehmer sämtlich nicht, so wird der nächste Synchronisationspuls nach Ablauf der Taktzeit durch den Busmaster ausgegeben.

Bei einem sicherheitskritischen Zustand, bei dem beispielsweise der Busteilnehmer mit höchster Sendepriorität aktiviert ist, wird der Datenbus zunächst durch dessen Telegramm t₁ belegt. Der Teilnehmer mit der nächstfolgenden Sendepriorität sendet beispielsweise dann ebenfalls und gibt das Telegramm t₂ aus. Entsprechendes geschieht für den Teilnehmer mit dem Telegramm t₃. Jedes Telegramm tᵢ besitzt, wie an sich aus der DE 34 35 216 A bekannt, eine Kennung, aufgrund derer die anderen Teilnehmer das Telegramm identifizieren und ggf. aufnehmen können. Es ist auch möglich, Telegramme auf den Datenbus auszugeben, die die Adresse eines Empfängers enthalten und nur für diesen bestimmt sind. Nach Ablauf der Taktzeit und wenn zu diesem Zeitpunkt kein Teilnehmer sendet, wird der nächste Synchronisationspuls s ausgegeben.

Sendet hingegen ein Teilnehmer bei Ablauf der Taktzeit, so wird die Ausgabe des Synchronisationspulses verzögert. Dieser Fall ist in dem mit Zyklus 2 bezeichneten Zeitraum dargestellt. Die Verzögerung t_{_w0} muß dabei kleiner als der zeitliche Abstand t_{_wx} sein, der zwischen den Sendungen aufeinanderfolgender Teilnehmer besteht.

Der anschließende Synchronisationspuls, hier s₃ ist mit dem ersten, zu Beginn des Zyklus 1 ausgegebenen Synchronisationspulses s₀ und dem Synchronisationspuls s₁ synchronisiert. Der zeitliche Abstand zwischen dem Synchronisationspuls s₂ und und s₃ ist kleiner als die Taktzeit.

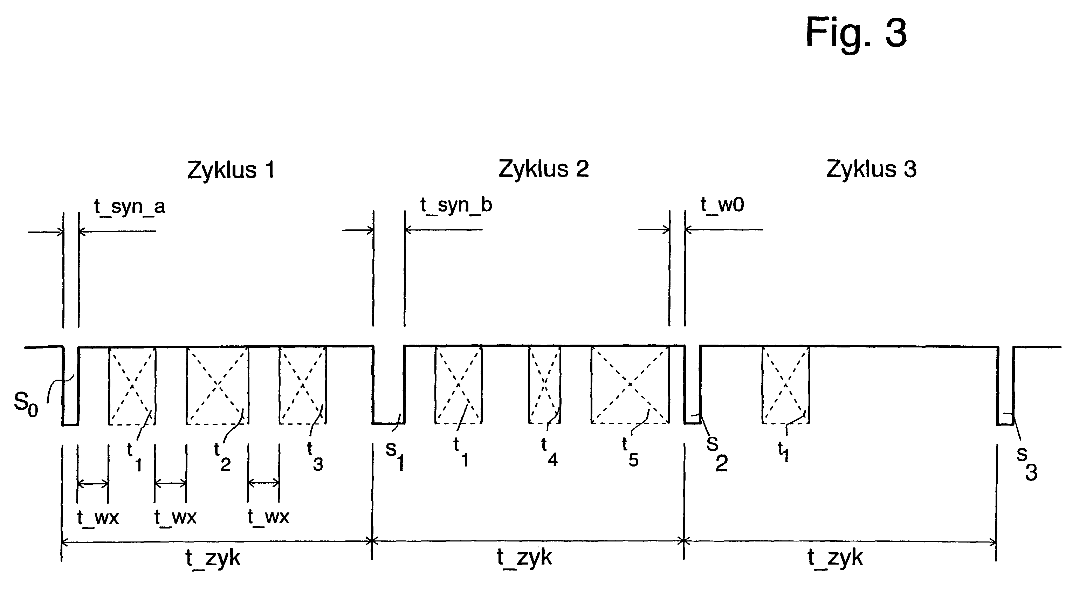

Der nicht im einzelnen dargestellte Datenbus, dessen Telegrammverkehr Fig. 3 zeigt, ist grundsätzlich genauso wie der Datenbus von Fig. 1 aufgebaut. Auch hier wird nach Ablauf der Taktzeit t__{zyk} der nächste Synchronisationspuls s ausgegeben.

Würde ein Teilnehmer bei Ablauf der Taktzeit t_{_zyk} noch senden, so wird in diesem Fall die Sendung dieses Teilnehmers unterbunden. Hierzu berechnet jeder Teilnehmer die ihm innerhalb der Zykluszeit jeweils für seine Sendung zur Verfügung stehende (Ist-)Zeit und unterläßt die Sendung, wenn seine Sendedauer t₁, t₂, t₃, ... nicht mindestens um den Wert t_wx vor dem Ablauf der Zykluszeit t_{_zyk} liegt. Der Wert t_{_wx} stellt im wesentlichen die maximale Signallaufzeit innerhalb des Datenbusses dar.

In Fig. 2 und 3 sind weitere Merkmale des Datenbusses dargestellt. Im Zyklus 2 sind als aktive Sender die Teilnehmer T₁, T₄ und T₈ angenommen. Der Sendezeitpunkt bemißt sich nach dem Ende der Sendung des hierarchiemäßig vorausgehenden Teilnehmers und der eigenen hierarchischen Stellung. Bei aufeinanderfolgenden hierarchischen Stellungen zweier Sender ist der zeitliche Abstand minimal und gleich t_{wx}. Der zeitliche Abstand zweier Sender nimmt mit ihrem hierarchischen Abstand zu. Deshalb ist der Abstand zwischen t₁ und t₄ größer als der Abstand zwischen t₁ und t₂ und kleiner als der Abstand zwischen t₄ und t₈. Auf diese Weise erhält jeder Teilnehmer die Möglichkeit, im Bedarfsfall zu senden, sofern seine Sendeberechigung innerhalb der Zykluszeit vorliegt. Andrerseits sendet er nur dann, wenn tatsächlich ein Notfall vorliegt. Trotzdem ist der Sendezeitpunkt genau festgelegt. Kollisionen werden dadurch vermieden. Der Sendezeitpunkt jedes Teilnehmers ist der frühestmöglliche.

Im Alarmfall wird die Dauer des Synchronisationspulses verlängert. Dadurch wird ein Schutz gegen eine Fehlauslösung einer Sicherheitseinrichtung erreicht.Sie löst nur dann aus, wenn durch den (verlängerten) Synchronisationspuls (t_{_syn_b} statt _{t_syn_a}) ein kritischer Zustand signalisiert wird und sie zusätzlich ein entsprechendes Telegramm eines Crash-Sensors erhält. Im Crashfall löst die Sicherheitseinrichtung somit nicht in dem Zyklus, in dem erstmalig das Telegramm des Crash-Sensors erscheint, sondern im nachfolgenden Zyklus, zu dessen Beginn ein kritischer Zustand des Gesamtsystems durch den verlängerten Synchronisationspuls signalisiert und die tatsächliche Gefahr durch den weiterhin sendenden Crash-Sensor angezeigt wird.

Ferner besteht bei diesen Datenbussen die Möglichkeit, sie außerhalb des Alarmfalls durch Teilnehmer zu belegen, die nicht-sicherheitskritischen Einrichtungen zugeordnet sind. Diese Einrichtungen können beispielsweise in einer Fahrzeugtür angeordet sein und zur Bewegung des Fensters, des Außenspiegels oder zur Türschloßheizung verwendet sein. Voraussetzung dafür ist lediglich eine Priorität, die kleiner ist als die der sicherheitskritischen Einrichtungen, um deren Betrieb im Alarmfall nicht zu stören.

Auf diese Weise wird erstmalig die Möglichkeit eröffnet für die Insassen-Sicherheit der Fahrzeugbenutzer zuständige Einrichtungen über einen Datenbus kommunizieren zu lassen

## Patentansprüche

1. Datenbus für mehrere Teilnehmer, gekennzeichnet durch folgende Merkmale:
a) die Teilnehmer besitzen eine hierarchische Sendeberechtigung,
b) die Teilnehmer sind durch einen Synchronisationspuls synchronisiert
c) die Taktzeit des Synchronisationspulses liegt zwischen der Sendedauer des prioritätshöchsten Teilnehmers und der kumulierten Sendezeit aller Teilnehmer,

2. Datenbus nach Anspruch1, **dadurch gekennzeichnet,** daß der rangniedrigere Teilnehmer dann, wenn der ranghöhere Teilnehmer nicht sendet, seine Sendeberechtigung in einem zeitlichen Abstand vom Sendezeitpunkt dieses (ranghöheren) Teilnehmers aus gerechnet besitzt, der im wesentlichen durch die maximale Signallaufzeit innerhalb des Datenbusses bestimmt ist.

3. Datenbus nach Anspruch 1 oder 2, **dadurch gekennzeichnet,** daß der Teilnehmer nicht sendet wenn die Zeitspanne zwischen seinem Sendeberechtigungszeitpunkt und dem Zeitpunkt für die Ausgabe des folgenden Sychronisationspulses kleiner als seine Sendedauer ist.

4. Datenbus nach einem der Ansprüche 1 bis 3, **dadurch gekennzeichnet,** daß die Teilnehmer über einen aktiven Sternkoppler miteinander verbunden sind.

5. Datenbus nach einem der Ansprüche 1 bis 4, **dadurch gekennzeichnet,** daß die Teilnehmer im Normalfall ein Zustandssignal abgeben.

6. Datenbus nach einem der Ansprüche 1 bis 5, **dadurch gekennzeichnet,** daß der Synchronisationspuls unterschiedliche Längen entsprechend unterschiedlichen Zuständen der dem Datenbus zugeordneten Einrichtung besitzt.

7. Datenbus nach einem der Ansprüche 1 bis 6, **dadurch gekennzeichnet,** daß der Zustand durch den Sendebetrieb eines bestimmten Teilnehmers definiert ist.

8. Datenbus nach einem der Ansprüche 1 bis 7, **dadurch gekennzeichnet,** daß der Synchronisationspuls durch einen Teilnehmer ausgesandt ist.

## Claims

1. A data bus for a number of subscribers, characterised by the following features:
a) the subscribers have hierarchical authorisation to transmit,
b) the subscribers are synchronised by a synchronisation pulse, and
c) the cycle time of the synchronisation pulse is between the duration of transmission by the highest-priority subscriber and the cumulative time of transmission by all subscribers.

2. A data bus according to claim 1, characterised in that when a higher-rank subscriber is not transmitting, a lower-rank subscriber is authorised to transmit during a time interval calculated from the time of transmission by the higher-rank subscriber, and determined substantially by the maximum signal running time within the data bus.

3. A data bus according to claim 1 or 2, characterised in that the subscriber does not transmit if the time span between the time when the subscriber is authorised to transmit and the time for outputting the next synchronisation pulse is shorter than the subscriber's transmission time.

4. A data bus according to any one of claims 1 to 3, characterised in that the subscribers are interconnected by an active star coupler.

5. A data bus according to any one of claims 1 to 4, characterised in that the subscribers normally deliver a state signal.

6. A data bus according to any one of claims 1 to 5, characterised in that the synchronisation pulse has a length which varies with the different states of the apparatus associated with the data bus.

7. A data bus according to any one of claims 1 to 6, characterised in that the state is defined by the transmissions made by a particular subscriber.

8. A data bus according to any one of claims 1 to 7, characterised in that the synchronisation pulse is transmitted by a subscriber.

## Revendications

1. Bus de données pour plusieurs participants,
caractérisé en ce que
a) les participants ont une autorisation hiérarchique d'émission,
b) les participants sont synchronisés par une impulsion de synchronisation,
c) la durée de cadence de l'impulsion de synchronisation est comprise entre la durée d'émission du participant de priorité la plus élevée et la durée d'émission cumulée de tous les participants.

2. Bus de données selon la revendication 1,
caractérisé en ce que
le participant de rang faible lorsque le participant de rang supérieur n'émet pas, possède une autorisation d'émettre calculée à partir de la distance dans le temps d'une installation d'émission de ce participant (de rang supérieur) définie principalement par le temps de parcours de signal maximum à l'intérieur du bus de données.

3. Bus de données selon la revendication 1 ou 2,
caractérisé en ce que
le participant n'émet pas si l'intervalle de temps entre son instant d'autorisation d'émission et l'installation de l'émission de l'impulsion de synchronisation suivante est inférieure à sa durée d'émission.

4. Bus de données selon l'une quelconque des revendications 1 à 3,
caractérisé en ce que
les participants sont reliés par un couple en étoile actif.

5. Bus de données selon l'une quelconque des revendications 1 à 4,
caractérisé en ce que
dans le cas normal, les participants émettent un signal d'état.

6. Bus de données selon l'une quelconque des revendications 1 à 5,
caractérisé en ce que
l'impulsion de synchronisation possède des longueurs différentes en fonction des états différents de l'installation associée au bus de données.

7. Bus de données selon l'une quelconque des revendications 1 à 6,
caractérisé en ce que
l'état est défini par le mode d'émission d'un certain participant.

8. Bus de données selon l'une quelconque des revendications 1 à 7,
caractérisé en ce que
l'impulsion de synchronisation est émise par un participant.
